# EUROPEAN PATENT APPLICATION

(11) **EP 2 403 242 A1**
(43) Date of publication of application: **04.01.2012**
(21) Application number: 10745828.3
(22) Date of filing: 25.02.2010
(51) Int. Cl.: H04N 7/15

(54) **REMOTE USER SIGNALS IDENTIFICATION METHOD, REMOTE CONFERENCE PROCESSING METHOD, APPARATUS AND SYSTEM**

(30) Priority: 27.02.2009 CN 200910118332
(71) Applicant: Huawei Device Co., Ltd., Longgang District Shenzhen Guangdong 518129 (CN)
(72) Inventor: WU, Jiaoli, Shenzhen Guangdong 518129 (CN)
(74) Representative: Charles, Glyndwr
(86) International application number: PCT/CN2010/070747
(87) International publication number: WO 2010/097044

(57) **Abstract**

A method for identifying user signals in remote presentation conferences, a method for processing remote conferences, an apparatus, and a system are provided. The method for identifying user signals in remote presentation conferences includes: obtaining user sign-in information and/or sign-out information from remote presentation conference halls, and identifying present user areas and absent user areas according to the user sign-in information and/or sign-out information; and determining that signals from the absent user areas are invalid signals and that signals from the present user areas are valid signals. In the remote presentation application scenario, attendance information in each user area can be identified easily and conveniently through the user registration apparatus arranged on the terminal side. According to the information, the invalid video and audio code streams can be effectively and automatically removed during video switching, image combination, and voice processing, so as to increase the performance and efficiency of the conference system, and operation usability.

## Description

This application claims priority to Chinese patent application No. 200910118332.9 filed with Chinese patent office on Feb. 27, 2009, and entitled "METHOD AND SYSTEM FOR PROCESSING REMOTE PRESENTATION CONFERENCE USER SIGNALS", which is incorporated herein in its entirety.

### FIELD OF THE INVENTION

The present invention relates to communication technologies, and in particular, to a method for identifying user signals in a remote presentation conference, a method for processing remote conferences, a remote conference controlling apparatus, a remote conference processing apparatus, and a remote presentation conference system.

### BACKGROUND OF THE INVENTION

A video conference is in the rapid development stage. The multiple service applications, suitable network resources, and convenient operations are all concerned by the user, manufacturer, and integrator. For the traditional video conference and the emerging remote presentation service, the utilization rate and the usability of the network resource are concerned in the industry.

In the currently emerging remote presentation service, many cameras, monitors, conference terminals in each conference hall are respectively arranged for attendees seated in different locations.

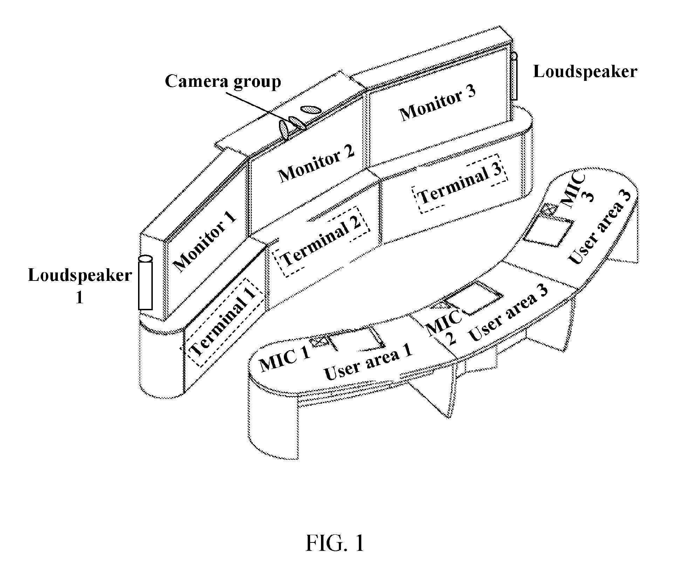

As shown in FIG.1, a typical schematic view of layout of a remote presentation conference hall is illustrated. Each user area is arranged with a microphone (MIC), a camera, a monitor, and a conference terminal. Two loudspeakers are arranged on the two sides of the monitors. In the conference, a camera 1 collects images of a user area 1 to send them to a local conference terminal 1. The local conference terminal 1 codes the images and sends the data to a remote conference terminal 1 corresponding to the remote conference hall. The remote conference terminal 1 decodes the data and displays the images on a monitor 1 in the remote conference hall. Similarly, the signals of user areas 2 and 3 are also processed in the same manner.

For simplified operations, each time a conference is held, multiple cameras, monitors, and conference terminals are operating concurrently in the conference hall. In remote presentation of multipoint services, all areas in the conference hall are arranged with cameras, but only one or two of these areas arranged with cameras are seated with attendees, and the rest areas arranged with cameras are seated with no attendee. When processing the video streams corresponding to the remote presentation conference hall, the multipoint control unit (MCU) cannot learn about which areas are seated with attendees or which areas are not seated with attendees. Therefore, the MCU may transmit the video code streams of the areas with no attendees to other conference halls. This wastes the transmission link resources. If video streams of the areas with no attendees need to be removed efficiently, information about the video streams must be obtained manually and manual operation is required for removing the invalid images of the areas with no attendees. The images of the areas with attendees are stitched and sent to other conference halls, which brings inconvenience in usage and operation.

### SUMMARY OF THE INVENTION

Various embodiments of the present invention are directed to a method for identifying user signals in a remote presentation conference, a method for processing remote conferences, a remote conference controlling apparatus, a remote conference processing apparatus, and a remote presentation conference system. With the technical solutions, signals in absent conference halls can be eliminated so that the efficiency and effects of the conference system are improved.

An embodiment of the present invention provides a method for identifying user signals in remote presentation conferences, including:
obtaining user sign-in information and/or sign-out information from remote presentation conference halls, and identifying present user areas and absent user areas according to the user sign-in information and/or sign-out information;
determining that signals from the absent user areas are invalid signals and that signals from the present user areas are valid signals.

An embodiment of the present invention provides a method for processing remote conferences, including:
collecting user sign-in information and/or sign-out information from different user areas in remote presentation conference halls; and
sending the user sign-in information and/or sign-out information to a network side.

An embodiment of the present invention provides a remote conference controlling apparatus, including:
an information receiving unit, configured to receive sign-in information and/or sign-out information from user terminals in remote presentation conference halls;
an identifying unit, configured to identify absent user areas according to the user sign-in information and/or sign-out information; and
a selecting unit, configured to determine that signals from the absent user areas are invalid signals and that signals from the present user areas are valid signals.

An embodiment of the present invention provides a remote conference processing apparatus, including:
an information obtaining unit, configured to collect user sign-in information and/or sign-out information from user areas in remote presentation conference halls; and
a sending unit, configured to send the user sign-in information and/or sign-out information to the remote conference controlling apparatus.

An embodiment of the present invention provides a remote presentation conference system, including: a user registration apparatus, a remote conference processing apparatus, and a remote conference controlling apparatus.

The user registration apparatus is arranged in remote presentation conference halls and configured to provide user sign-in information registered when a user attends the conference and sign-out information registered when a user leaves the conference.

The remote conference processing apparatus is configured to collect the user sign-in information and/or sign-out information about user areas from the user registration apparatus, and send the user sign-in information and/or sign-out information to the remote conference controlling unit.

The remote conference controlling apparatus is configured to identify absent user areas and present user areas according to the received user sign-in information and/or sign-out information, determine that signals from the absent user areas are invalid signals and that signals from the present user areas are valid signals, and send the valid signals to at least one of remote presentation conference halls.

According to the technical solutions provided in embodiments of the present invention, in the remote presentation application scenario, attendance information in each user area can be identified easily and conveniently through the user registration apparatus arranged on the terminal side, and the attendance information can be sent to the network side through the communication channel of the device on the current multimedia communication network. The network removes the invalid video and audio code streams effectively and automatically in video switching, image combination, and voice processing, thereby increasing the performance and efficiency the conference system, and operation usability.

### BRIEF DESCRIPTION OF THE DRAWINGS

FIG. 1 is a schematic view of layout of a remote presentation conference hall in the prior art;

FIG. 2 is a networking diagram of a remote presentation conference system according to an embodiment of the present invention;

FIG. 3 is a structure view of an apparatus on the terminal side in a remote presentation conference system according to an embodiment of the present invention;

FIG. 4 is a schematic view of a user interface for centralized registration information in a remote presentation conference system according to an embodiment of the present invention;

FIG. 5 is a structure view of a remote conference controlling apparatus according to an embodiment of the present invention;

FIG. 6 is a structure view of a remote conference processing apparatus according to an embodiment of the present invention;

FIG. 7 is a structure view of an apparatus on the terminal side in a remote presentation conference hall according to an embodiment of the present invention;

FIG. 8 is a flowchart of a method for identifying user signals from remote presentation conferences according to an embodiment of the present invention;

FIG. 9 is a flowchart of a method for processing remote conference according to an embodiment of the present invention;

FIG. 10 is a flowchart of audio signal processing according to an embodiment of the present invention;

FIG. 11 is an architecture diagram of multipoint conference systems in remote presentation conference halls according to an embodiment of the present invention;

FIG. 12 is an architecture diagram of a conference system integrated with a remote presentation conference hall and a common conference hall according to an embodiment of the present invention; and

FIG. 13 is a networking diagram of centrally processing registration information according to another embodiment of the present invention.

### DETAILED DESCRIPTION OF THE EMBODIMENTS

In remote presentation conference application scenarios, it is detected whether an area arranged with cameras is seated with attendees and the information is collected and saved on a conference terminal. The terminal sends the information to an MCU. The MCU performs efficient conference hall stitching, and controls the forwarding of video and audio code streams, and prompts a user to control the conference according to the information. The information can be forwarded to the conference chairman through the MCU to serve as a basis for the chairman to control the conference. Accordingly, various embodiments of the present invention are directed to a method and system for processing user signals from absent user areas in remote presentation conferences. The absent user areas can be identified according to user registration information after the user registration information of the remote presentation conferences is obtained. Signals from the absent user areas are determined to be invalid signals and signals from present user area are determined to be invalid ones. The valid signals are sent to other remote presentation conference halls according to a predetermined policy. In this way, the video code streams of the present user areas are only sent to the remote presentation conference halls when multi-channel video code streams are sent. The video streams of the absent user areas can be removed when the multi-image formed of multi-channel video code streams is present to conference halls combined by common conference halls and remote presentation conference halls, or when the common conference hall polls all channels of video streams in the remote presentation conference halls. In addition, the chairman conference hall can control the video, audio, and conference according to the preceding information.

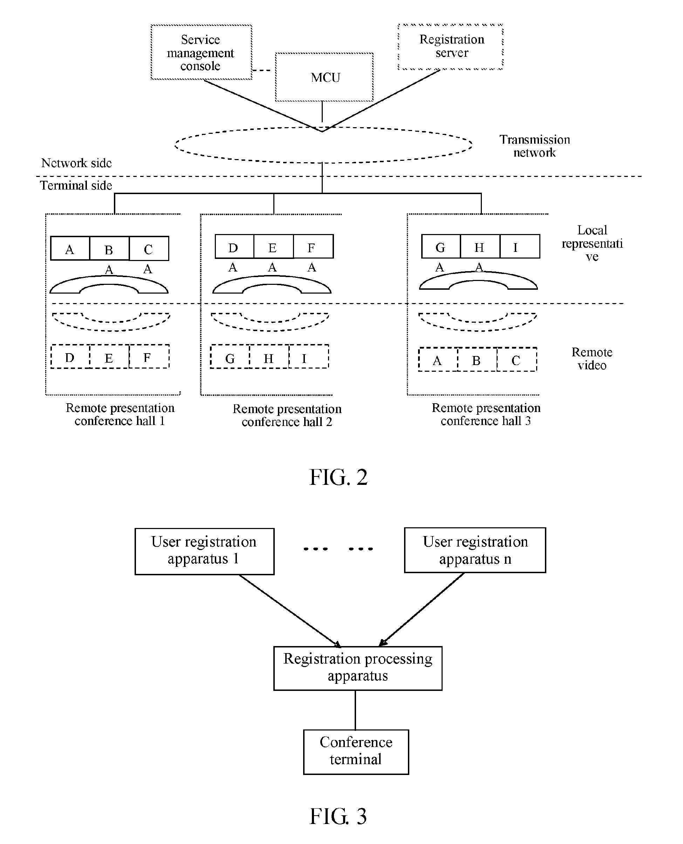

As shown in FIG. 2, the system according to the present invention includes a terminal side and network side. The network side includes:
a service management console, configured to manage the MCU; an MCU, configured to perform a multipoint conference interaction; and a registration server, configured to receive registration information of the MCU and conference terminals. In other embodiments of the present invention, the network side can has no registration server because no registration server exists in the E1, integrated services digital network (ISDN) for the video conference. The terminal side is generally comprised of the remote representation conference halls, including a conference hall and devices such as tables and chairs, camera group, monitor group, MIC group, loudspeaker (voice equipment) group, and the conference terminals.

According to the embodiments of the present invention, attendance information about each user area is collected in each conference hall. As shown in FIG. 3, in the remote presentation conference system, a user registration apparatus and a remote conference processing apparatus are arranged in the remote presentation conference hall on the terminal side. The user registration apparatus may be a commonly used MIC (each MIC provides a registration button) with the registration function or a registration device with the fingerprint identification function. It can be understood that the user registration apparatus may also be other apparatus whose function is to provide an interaction interface such as a user registration interface or button. Each registration apparatus logically corresponds to a user area. Registration information refers to both user sign-in information and user sign-out information. The remote conference processing apparatus may be a commonly used central control host or other registration processing apparatus whose function is to collect the registration information (including sign-in and sign-out information in each user area) from each user registration apparatus and to send the collected registration information to the conference terminal. The conference terminal saves the registration information upon receiving the information, and sends the information to the network side for further processing.

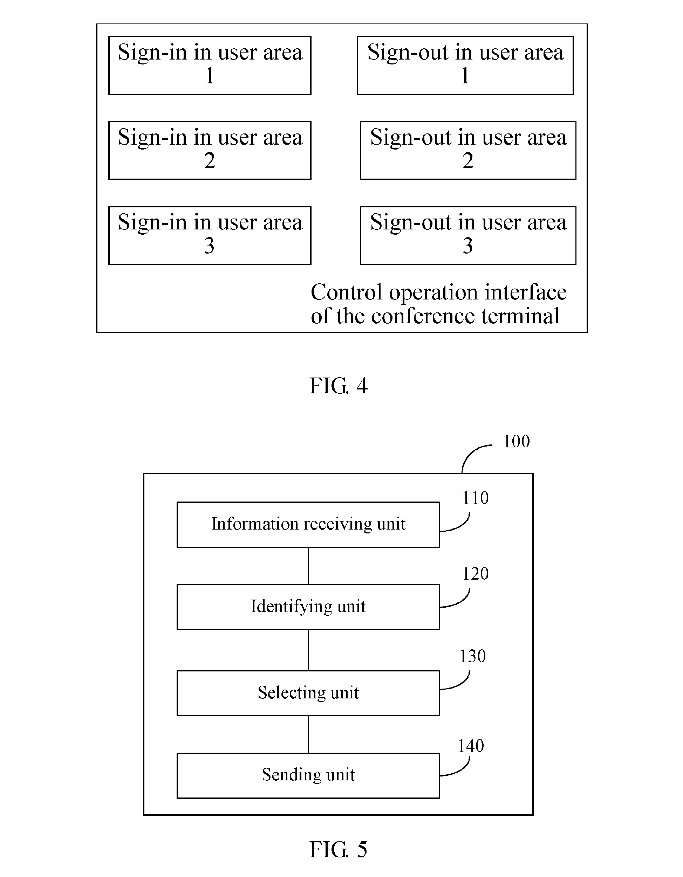

The user registration apparatus and the remote conference processing apparatus can be integrated into a same device. In such a case, the user registration apparatus logically corresponds to multiple user areas, collects (multiple collecting manners such as manual input, input with a button, input with a user interface) user sign-in and sign-out information in each user area, and sends the information to the conference terminal. For example, user registration information collection function can be integrated on the call control operation interface of the conference terminal, as shown in FIG. 4.

The conference terminal for collecting the registration information may be pre-defined, and may also be a main conference terminal in the conference hall. In each user area, the conference terminal provides MIC information (number), camera information (number), monitor information (number), conference terminal information (number, phone number, and alias), and the user registration information.

Referring to FIG. 5, according to an embodiment of the present invention, a remote conference controlling apparatus 100 includes: an information receiving unit 110, an identifying unit 120, a selecting unit 130, and a sending unit 140.

The information receiving unit 110 is configured to receive user sign-in information and/or sign-out information from user terminals in remote presentation conference halls.

A user registration apparatus is arranged in each remote presentation conference hall, registers user sign-in information when a user attends the conference and/or sign-out information when a user leaves the conference, and sends the user sign-in information or sign-out information to the network side such as the conference control side.

The remote conference controlling apparatus on the conference control side receives the user sign-in information and/or sign-out information from the terminal side in the remote presentation conference hall.

The identifying unit 120 is configured to identify present user areas and absent user areas according to the user sign-in information and/or sign-out information.

The user sign-in information that is registered when users attend the conference indicates that the user area is a present user area. The user sign-out information that is registered when users leave the conference indicates that the user area is an absent user area.

The selecting unit 130 is configured to determine that signals from the absent user areas are invalid signals and that signals from the present user area are valid signals.

The sending unit 140 is configured to send the valid signals or invalid signals determined by the selecting unit to the remote presentation conference hall.

The apparatus may further include a controlling and processing unit, configured to stitch the present user areas in the remote presentation conference halls, or send video and audio code streams corresponding to the present user areas.

Implementation of functions of the units in the apparatus can be referred to the implementation of the method, and is not detailed here.

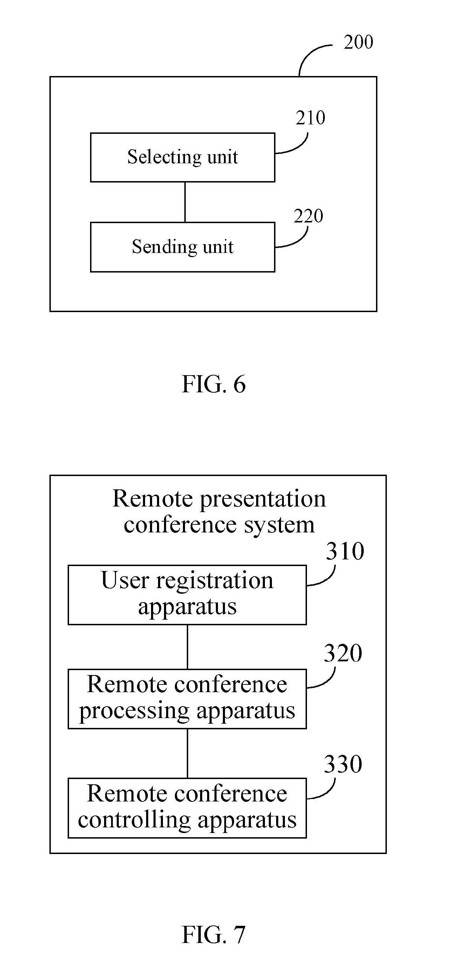

Referring to FIG. 6, a remote conference processing apparatus 200s includes:
an information obtaining unit 210, configured to collect user sign-in information and/or sign-out information from user areas in remote presentation conference halls; and
a sending unit 220, configured to send the user sign-in information and/or sign-out information to the remote conference controlling apparatus.

Implementation of functions of the units in the apparatus can be referred to the implementation of the method, and is not detailed here.

Referring to FIG. 7, in a remote presentation conference system provided by embodiments of the present invention, a terminal side in a remote presentation conference hall includes: a user registration apparatus 310, a remote conference processing apparatus 320, and a remote conference controlling apparatus 330.

The user registration apparatus 310 is arranged in the remote presentation conference hall and configured to provide user sign-in information that is registered when a user attends the conference and/or sign-out information that is registered when a user leaves the conference.

The remote conference processing apparatus 320 is configured to collect the user sign-in information and/or sign-out information about user areas from the user registration apparatus, and send the user sign-in information and/or sign-out information to the remote conference controlling unit, for example, send the user sign-in information and/or sign-out information to an MCU through conference terminals.

The remote conference controlling apparatus 303, for example, an MCU, is configured to identify absent user areas and present user areas according to the received user sign-in information and/or sign-out information, determine that signals from the absent user areas are invalid signals and that signals from the present user areas are valid signals, and send the valid signals to at least one of remote presentation conference halls or other remote presentation conference halls according to a predetermined policy.

The user registration apparatus may be a registration function apparatus integrated in a conference terminal, or a voice pick-up apparatus with the registration function, or a registration apparatus with the fingerprint identification function. It can be understood that the embodiments of the present invention include, but not limited to, the foregoing apparatuses and devices.

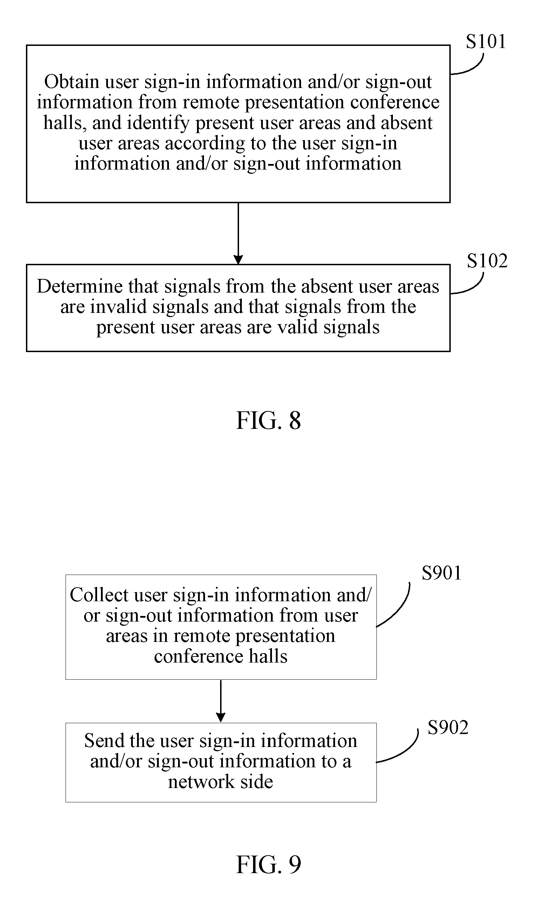

Referring to FIG. 8, a flowchart of a method for identifying user signals in remote presentation conferences according to an embodiment of the present invention is illustrated. The method includes the following steps.

S101: Obtain user sign-in information and/or sign-out information from remote presentation conference halls, and identify present user areas and absent user areas according to the user sign-in information and/or sign-out information.

The obtaining user sign-in information and/or sign-out information from remote presentation conference halls specifically includes:
registering user sign-in information when a user attends the conference and/or registering user sign-out information when a user leaves the conference through the user registration apparatuses arranged in the remote presentation conference halls;
receiving the user sign-in information and sign-out information sent by the conference terminals in the remote presentation conference halls.

That is, the network side receives user sign-in information when a user attends the conference and/or sign-out information when a user leaves the conference, where the user sign-in information and/or sign-out information may be sent by the user registration apparatuses arranged in the remote presentation conference halls.

The user registration apparatus may be a registration function apparatus integrated in a conference terminal, or a voice pick-up apparatus with the registration function, or a registration apparatus with the fingerprint identification function. The embodiments of the present invention include, but not limited to, the user registration apparatus.

S102: Determine that signals from the absent user areas are invalid signals and that signals from the present user areas are valid signals.

With the method, the valid signals can also be sent to at least one of remote presentation conference halls corresponding to the present user areas according to the predetermined policy. The remote presentation conference halls in the present user areas are seated with attendees. Alternatively, the user registration information can be obtained from the conference terminals in the following modes.

The network side server collects the user sign-in information and/or sign-out information from the remote presentation conference halls directly, and forwards the collected user sign-in information and/or sign-out information to an MCU.

Alternatively, the network side server collects the user sign-in information and/or sign-out information from the remote presentation conference halls directly, and forwards the collected user sign-in information and/or sign-out information to a specified terminal in the chairman conference hall.

Optionally, the method may further include stitching the present user areas in the remote presentation conference halls or sending video and audio code streams corresponding to the present user areas.

Optionally, the method may further include sending identifier information about the present user areas and/or absent user areas to the remote presentation conference halls.

Optionally, the method may further include controlling data transmission bandwidth of conference terminals in the conference halls corresponding to the absent user areas within a preset rate range.

Correspondingly, an embodiment of the present invention provides a method for processing remote conferences. The flowchart of the method is shown in FIG. 9. The method includes the following steps.

S901: Collect user sign-in information and/or sign-out information from user areas in remote presentation conference halls.

S902: Send the user sign-in information and/or sign-out information to a network side.

The process of sending the user sign-in information and/or sign-out information is specifically as follows:

Conference terminals in the remote presentation conference halls send the user sign-in information and/or sign-out information to a network side through a non-standard signaling channel of a registration admission status (RAS) channel if the remote presentation conference halls are H.323 halls on the IP network.

Conference terminals in the remote presentation conference halls send the user sign-in information and/or sing-out information to a Session Initiation Protocol (SIP) registration server through a SIP extended channel if the remote presentation conference halls are SIP halls on the IP network.

Conference terminals in the remote presentation conference halls send the user sign-in information and/or sing-out information to an MCU through a connected E1 channel if the remote presentation conference halls are halls on the E1 network.

During calling of the conference terminal arranged in the remote presentation conference hall, the user sign-in information and/or sign-out information is sent to the MCU through the user-selected signaling of the call. The user-selected signaling may include H.221, H.242, Q.931, or H.245 non-standard signaling, but not limited herein.

Conference terminals in the remote presentation conference halls send the user sign-in information and/or sing-out information to a server, which is used for processing the registration information, if the remote presentation conference halls are based on the IP network.

In addition, no matter which type of server receives the registration information from the terminal side, the registration information of the attendees is all forwarded by the server to the MCU or a management console of the MCU for further processing.

Further, the valid signals are sent to other remote presentation conference halls according to the predetermined policy.

Specifically, the call in the main conference hall and the conference controlling and processing modes are as follows.

If all attendees to a remote presentation conference hall do not sign in, the conference images and voices are not sent to the conference hall, or all conference terminals in the remote presentation conference hall are suspended.

Alternatively, the identifier information about the present user areas and absent user areas is sent to the remote presentation conference halls so that corresponding valid signals are selected to display in each remote presentation conference hall.

For saving bandwidths, the data transmission bandwidth of the conference terminals corresponding to the absent user areas can be controlled in a preset rate range. For example, the MCU can control the video code stream rate corresponding to the absent user areas to be lower than 50 kbit/s.

According to the conference registration information, the MCU and terminals, through a private agreement between the MCU and terminals, disable the channel that is used for sending video code streams corresponding to the absent user areas and forbid the terminal side to send the video code streams corresponding to these areas.

When multiple images are combined, the video code streams corresponding to the absent user areas are not converted into the multiple images.

Generally, the management console of the MCU in the main conference hall can display attendance information in each conference hall. According to the attendance information, the conference can be controlled, for example, broadcasting for the entire conference hall, broadcasting for some present user areas in the conference hall, or selectively watching.

The policy for MCU audio processing is as follows.

If the terminal side sends the audio code streams in each user area to the MCU for processing, the MCU may discard the audio code streams or mute the voices in the absent user areas and the MCU does not perform voice mixing operation for these audio code streams.

If the audio in the remote presentation conference hall is processed through a conference terminal, other conference terminals do not participate in the audio processing. That is, all MICs and loudspeakers in a conference hall are only connected to a specified conference terminal. The characteristic of such a processing mode is generally to perform voice mixing operation for the audio code streams corresponding to each user area on the terminal side and to send the code stream after voice mixing to the MCU. According to the embodiments of the present invention, the conference terminal directly removes the code streams or mutes the voices in the absent user areas, processes voice mixing operation locally, and sends the code streams after voice mixing to the MCU.

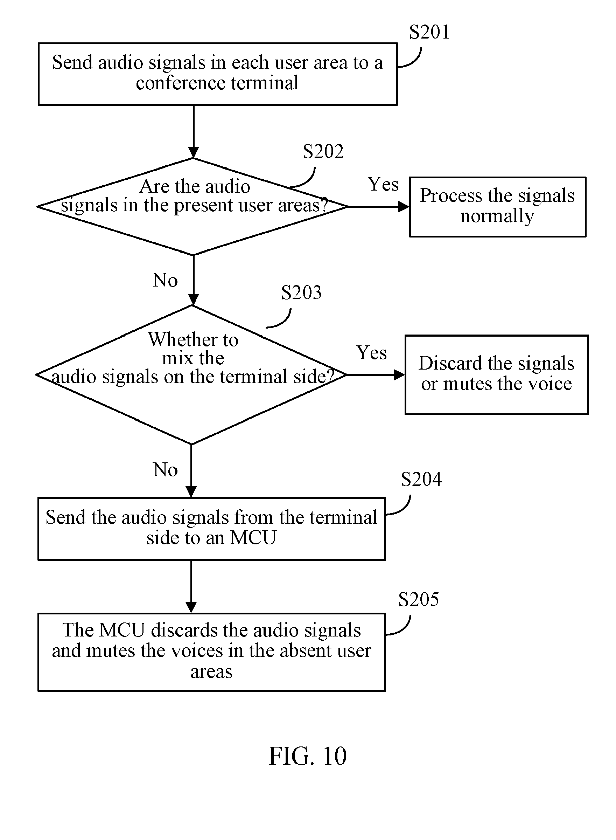

Referring to FIG. 10, the audio processing according to an embodiment of the present invention is detailed as follows:

S201: Send audio signals corresponding to each user area to a conference terminal.

S202: Determine whether the audio signals are audio signals corresponding to present user areas. If they are audio signals corresponding to the present user areas, process them normally; otherwise, perform step S203.

S203: Further determine whether voice mixing operation is performed on the terminal side. If the voice mixing operation is performed on the terminal side, discard the voice mixing signals or mute the voices; otherwise, perform step S204.

S204: Send the audio signals from the terminal side to an MCU for processing.

S205: The MCU discards the audio signals and mutes the voices in the absent user areas

The main conference hall processing is as follows:

The MCU sends user registration information to the chairman. The mode for sending the user registration information is the same as that for sending the user registration information from the terminal side to the network side.

The chairman terminal saves the registration information upon receiving the information. The registration information can be viewed at any time.

The chairman terminal controls the conference according to the registration information, for example, specifying a broadcasting policy on broadcasting for the entire conference hall or some user areas in the conference hall.

For example, the user registration information about a remote presentation conference hall is shown as follows.

| Remote presentation conference hall name | User area 1 | | User area 2 | | User area 3 | |
|---|---|---|---|---|---|---|
| | present or absent | Conference terminal number | Present or absent | Conference terminal number | Present or absent | Conference terminal number |
| Remote presentation conference hall 1 | Present | 075001 | Absent | 075002 | Absent | 075003 |
| Remote presentation conference hall 2 | Present | 021001 | Present | 021002 | Present | 021003 |
| Remote presentation conference hall 3 | Absent | 028001 | Present | 028002 | Present | 028003 |

Application scenario 1: Only the remote presentation conference hall is used for the conference.

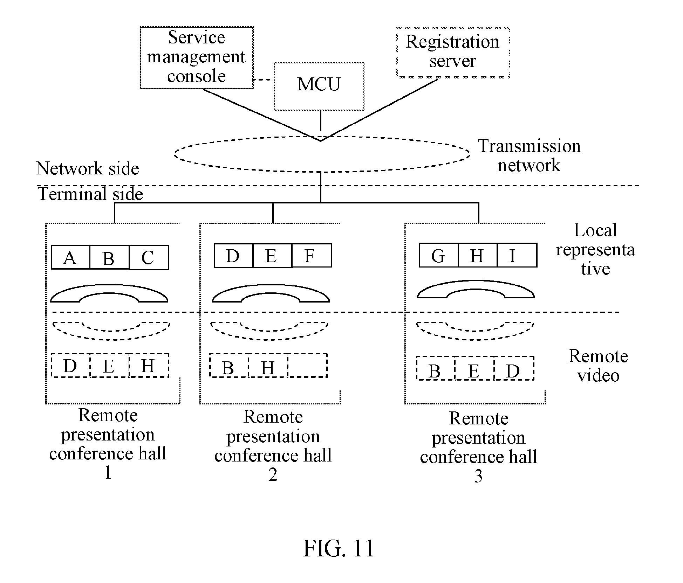

As shown in FIG. 11, it is assumed that no user sign-in information or sign-out information is registered in user areas A and C, that is, two absent user areas. When stitching images for each remote presentation conference hall (selects video streams on which channels to be sent to the conference hall), an MCU first removes the video code streams corresponding to the absent user areas, and sends the video code streams corresponding to the present user areas to each remote presentation conference hall according to the MCU internal processing policy. When the voice excitation function is enabled, the video streams corresponding to the absent user areas are not switched to each conference hall during video switching. In addition, on the management console user interface of the MCU, a prompt is provided for the absent user areas in the remote presentation conference halls.

Application scenario 2: The remote presentation conference hall and the common conference hall are used in the same conference.

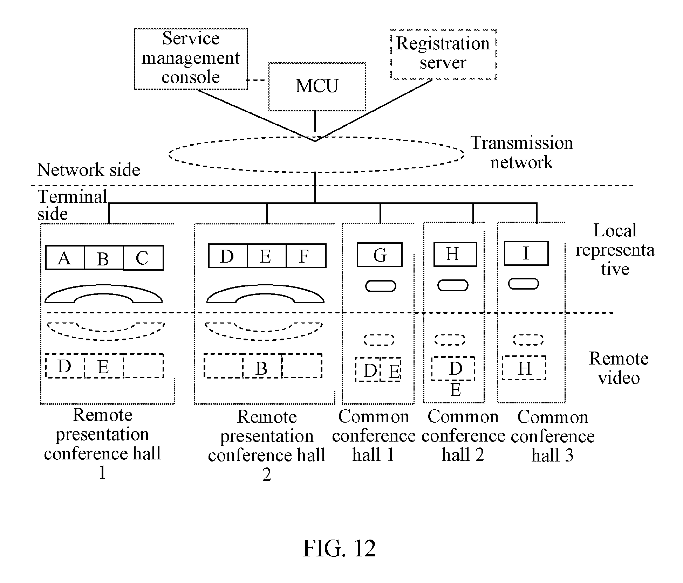

As shown in FIG. 12, it is assumed that no user sign-in information or sign-out information is registered in user areas A and C, that is, two absent user areas. When the remote presentation conference hall and the common conference hall are used for the same conference, the MCU can remove the code streams corresponding to the absent user areas when sending a combined image of multi-channel video code streams corresponding to one of the remote presentation conference halls to the common conference hall. As shown in FIG. 12, when attendees in a common conference hall 1 watch images of a remote presentation conference hall 2, the MCU only needs to combine the video streams corresponding to user areas D and E into multi-image and send the image to the common conference hall 1. The video code streams corresponding to the absent user areas can be removed when the common conference hall polls the all channels of video code streams in each remote presentation conference hall. As shown in FIG. 12, when a common conference hall 2 polls the code streams in a remote presentation conference hall 2, the MCU only needs to send the video code streams corresponding to user areas D and E, rather than the video code streams corresponding to a user area F, to the common conference hall 2.

When multiple images in the conference are combined, the video code streams corresponding to the absent user areas are not converted into the multiple images.

### Embodiment 2

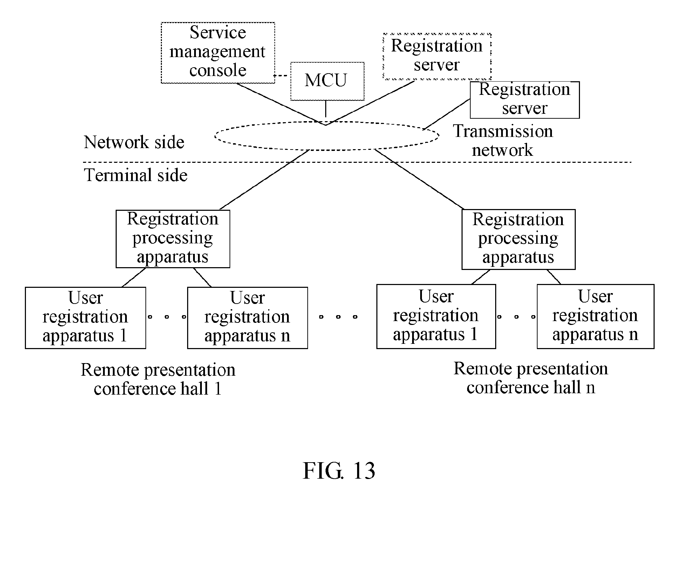

The embodiment is basically the same with the preceding embodiment, the difference lies in that user registration information is not forwarded to a network side through a conference terminal, but is directly collected from each conference hall through a device (for example, the registration server which can be placed on a terminal side) on the network side, and then the information is forwarded to an MCU (management console) through an IP network or a serial port, as shown in FIG.13.

In this mode, it is required to maintain the user area information on the registration server, for example, the mapping between the user area information and the conference terminal. The MCU also needs to add additional interconnection device and information translation.

In addition, the user registration information may also be collected from each conference hall through a device (for example, a registration server) on the network, instead of being forwarded to the chairman conference hall through an MCU. The collected user registration information is forwarded to a specified terminal in the chairman conference hall through the IP network or serial port.

It should be noted that in the common video conference field, user registration may also be used to control whether to hold the conference. To be specific, when the attendance rate reaches 80%, the video conference is held automatically without human intervention. The video conference is terminated automatically when 70% of the attendees leave the conference.

Finger registration of the main attendees, which takes place of the conference password, is used to control whether to hold the conference, which ensures conference security.

In the common video conference application, a conference is generally convened in a unified manner. It is possible that there is no attendee in a conference hall when the conference is convened. In this case, with the registration function, this conference hall can be suspended, or attendees are not allowed to attend the conference, or no images and voice signals of the conference are sent to this conference hall, so as to ensure information security.

In conclusion, the method and system for identifying user signals in remote presentation conference halls are provided according to the embodiments of the present invention. The absent user areas in the remote presentation conference halls are identified, the audio and video signals from the absent user areas are removed, and the video and audio signals from the present user areas are sent to other remote presentation conference halls according to the predetermined policy. In this way, the video code streams of the present user areas are only sent when multi-channel video code streams are sent to the remote presentation conference halls. The video code streams corresponding to the absent user areas can be removed when the multi-image formed by multi-channel video code streams is present to the conference halls combined by common and remote presentation conference halls, or when the common conference hall polls all channels of video streams in the remote presentation conference halls. In addition, the chairman conference hall can control the video, audio, and conference according to the information.

According to the embodiments of the present invention, in the remote presentation application scenario, attendance information in each user area can be easily and conveniently identified through the user registration apparatus arranged on the terminal side and the attendance information can be sent to the network side through the communication channel of the device on the current multimedia communication network. During video switching, image combination, and voice processing, the network removes the invalid video and audio code streams effectively and automatically without manual intervention, so as to increase the conference efficiency and usability of the conference system.

It is apparent that those skilled in the art should understand that the preceding steps of the invention can be implemented through a universal calculating apparatus. These steps can be integrated into a calculating apparatus or arranged on the network composed by multiple calculating apparatuses. Optionally, they can be implemented through the program code executed by the calculating apparatus. Thus they can be stored in a storage apparatus and implemented by the calculating apparatus. Alternatively, the steps each can be made into an integrated circuit module or the steps can be made into one separate integrated circuit module for implementation. The present invention is not limit to any combination of the hardware and software.

The foregoing embodiments are only exemplary ones for illustrating the present invention but not intended to limit the protection scope of the present invention. Any modification, equivalent replacement, or improvement made without departing from the spirit and principle of the present invention should fall within the protection scope of the present invention.

## Claims

1. A method for identifying user signals in remote presentation conferences, comprising:
obtaining user sign-in information and/or sign-out information from remote presentation conference halls, and identifying present user areas and absent user areas according to the user sign-in information and/or sign-out information; and
determining that signals from the absent user areas are invalid signals and that signals from the present user areas are valid signals.

2. The method according to claim 1, further comprising:
sending the valid signals to at least one of the remote presentation conference halls corresponding to the present user areas.

3. The method according to claim 1, further comprising:
stitching the present user areas in the remote presentation conference halls, or sending video and audio code streams corresponding to the present user areas according to the valid signals.

4. The method according to claim 1, further comprising:
sending identifier information about the present user areas and/or absent user areas to the remote presentation conference halls.

5. The method according to claim 1, wherein obtaining user sign-in information and/or sign-out information from remote presentation conference halls specifically comprises:
receiving user sign-in information when a user attends the conference and/or sign-out information when a user leaves the conference, wherein the user sign-in information and/or sign-out information may be sent by the user registration apparatuses arranged in the remote presentation conference halls.

6. The method according to claim 1, wherein obtaining user sign-in information and/or sign-out information from remote presentation conference halls specifically comprises:
collecting, by a network side server, the user sign-in information and/or sign-out information from the remote presentation conference halls directly, and forwarding the collected user sign-in information and/or sign-out information to a multipoint control unit (MCU); or
collecting, by a network side server, the user sign-in information and/or sign-out information from the remote presentation conference halls directly, and forwarding the collected user sign-in information and/or sign-out information to a terminal in a chairman conference hall.

7. The method according to claim 1, further comprising:
controlling data transmission bandwidth of conference terminals in the conference halls corresponding to the absent user areas within a predetermined rate range.

8. A method for processing remote conferences, comprising:
collecting user sign-in information and/or sign-out information from user areas in remote presentation conference halls; and
sending the user sign-in information and/or sign-out information to a network side.

9. The method according to claim 8, wherein sending user sign-in information and/or sign-out information specifically comprises:
sending, by conference terminals in the remote presentation conference halls, the user sign-in information and/or sign-out information to a network side through a non-standard signaling channel of a registration admission status (RAS) channel if the remote presentation conference halls are H.323 halls based on an Internet Protocol (IP) network; or
sending, by conference terminals in the remote presentation conference halls, the user sign-in information and/or sign-out information to a Session Initiation Protocol (SIP) registration server through a SIP extended channel if the remote presentation conference halls are SIP halls based on an Internet Protocol (IP) network; or
sending, by conference terminals in the remote presentation conference halls, the user sign-in information and/or sign-out information to a multipoint control unit (MCU) through a connected E1 channel if the remote presentation conference halls are based on an E1 network; or
sending, by conference terminals in the remote presentation conference halls, the user sign-in information and/or sign-out information to a multipoint control unit (MCU) through a user-defined signaling of a call during the call setup process of the terminals; or
sending, by conference terminals in the remote presentation conference halls, the user sign-in information and/or sign-out information to a server that is used for processing the registration information if the remote presentation conference halls are based on an Internet Protocol (IP) network.

10. A remote conference controlling apparatus, comprising:
an information receiving unit, configured to receive user sign-in information and/or sign-out information from terminals in remote presentation conference halls;
an identifying unit, configured to identify present user areas and/or absent user areas according to the user sign-in information and/or sign-out information; and
a selecting unit, configured to determine that signals from the absent user areas are invalid signals and that signals from the present user areas are valid signals.

11. The apparatus according to claim 10, further comprising:
a sending unit, configured to send the valid signals or invalid signals to at least one of remote presentation conference halls, wherein the valid signals or invalid signals are determined by the selecting unit.

12. The apparatus according to claim 10, further comprising:
a controlling and processing unit, configured to, according to the valid signals, stitch the present user areas in the remote presentation conference halls, or only send video and audio code streams corresponding to the present user areas.

13. A remote conference processing apparatus, comprising:
an information obtaining unit, configured to collect user sign-in information and/or sign-out information from user areas in remote presentation conference halls; and
a sending unit, configured to send the user sign-in information and/or sign-out information to a remote conference controlling apparatus.

14. A remote presentation conference system, comprising: a user registration apparatus, a remote conference processing apparatus, and a remote conference controlling apparatus, wherein
the user registration apparatus is arranged in remote presentation conference halls and configured to provide user sign-in information and/or sign-out information;
the remote conference processing apparatus is configured to collect the user sign-in information and/or sign-out information about user areas from the user registration apparatus, and send the user sign-in information and/or sign-out information to the remote conference controlling apparatus; and
the remote conference controlling apparatus is configured to identify absent user areas and present user areas according to the received user sign-in information and/or sign-out information, determine that signals from the absent user areas are invalid signals and that signals from the present user areas are valid signals, and send the valid signals to at least one of remote presentation conference halls.

15. The system according to claim 14, wherein the user registration apparatus is a registration function apparatus integrated in a conference terminal, or a voice pickup apparatus with the registration function, or a registration device with the fingerprint identification function.
